# EUROPÄISCHE PATENTSCHRIFT

(11) **EP 3 166 706 B1**
(45) Veröffentlichungstag und Bekanntmachung des Hinweises auf die Patenterteilung: **18.03.2020**
(21) Anmeldenummer: 15727560.3
(22) Anmeldetag: 09.06.2015
(51) Int. Cl.: B01D 27/00, B01D 29/21, B01D 29/23, B01D 29/58, D21H 21/48, D21H 27/08

(54) **FILTERELEMENT**
FILTER ELEMENT
ÉLÉMENT FILTRANT

(30) Priorität: 09.07.2014 DE 102014010175
(43) Veröffentlichungstag der Anmeldung: 17.05.2017
(73) Patentinhaber: Hydac Filtertechnik GmbH, 66280 Sulzbach/Saar (DE)
(72) Erfinder: KLEIN, Volkmar, 66482 Zweibrücken (DE); BROCKER, Claudia, 66121 Saarbrücken (DE)
(74) Vertreter: Bartels und Partner, Patentanwälte
(86) Internationale Anmeldenummer: PCT/EP2015/001156
(87) Internationale Veröffentlichungsnummer: WO 2016/005020

(56) Entgegenhaltungen:
- EP-A1- 2 050 489
- WO-A1-2006/005498
- WO-A1-2012/172018
- DE-A1-102006 028 161
- DE-U1-202010 001 721
- US-A1- 2013 015 369

## Beschreibung

Die Erfindung betrifft ein Filterelement für die Fluidfiltration, insbesondere für Hydraulikfluid, mit den Merkmalen im Oberbegriff von Anspruch 1.

Filterelemente dieser Art sind auf dem Markt in einer Vielzahl von Ausführungsformen frei erhältlich. Derartige Filterelemente, wie sie beispielhaft in der DE 10 2004 061 078 A1 und EP 0 001 407 B1 aufgeführt sind, dienen dazu, in ein Filtergehäuse eingesetzt zu werden, um zugeführtes verschmutztes Fluid, beispielsweise in Form eines Hydraulikmediums, durch den Einsatz des Filtermaterials des Filterelements abzureinigen und das derart abgereinigte Fluid aus dem Filtergehäuse heraus in den Fluid-Kreislauf, insbesondere Hydraulikkreislauf zurückzuführen. Ist nach einer Vielzahl von Filterzyklen das Filtermaterial dergestalt mit Verschmutzungen zugesetzt, dass es verbraucht ist, wird das Filterelement aus dem Gehäuse entfernt und gegen ein neues Element ausgetauscht.

Zur Erhöhung der filtrierenden Oberfläche weisen die Filter regelmäßig eine sternförmig gefaltete oder plissierte Filtermattenbahn auf, die in konzentrischer Kreisführung ein innen- und/oder außenliegendes Stützrohr umgibt, gegen das sich das Filtermaterial mit seinen im Querschnitt sternförmig angeordneten Filterfalten je nach Durchströmungsrichtung abstützen kann. Insoweit besteht auch die Möglichkeit der Umkehr der Filtrationsrichtung, so dass auch Rückspülvorgänge mit bereits gereinigtem Fluid ermöglicht sind, um dergestalt das von der Partikel-Verschmutzung zugesetzte Filtermaterial abzureinigen. Das Filtermaterial als solches weist einen mehrlagigen Mattenaufbau auf, wobei der dahingehende Lagenaufbau abhängig ist von der jeweils zu erbringenden Filtrationsaufgabe. Regelmäßig finden hier jedoch Schichtaufbauten Verwendung mit rein filtrierenden oder drainierenden Schichten, aufgebaut aus Nativfasern, Glasfasern, Metallfasermaterialien und Kunststofffasern, wie Melt-blown-Fasern, Karbonfasern und dergleichen mehr. Um einen festen Lagenverbund aneinander zu garantieren, kann darüber hinaus vorgesehen sein, dass die beiden Decklagen des Filtermaterials aus einem feinmaschigen Kunststoff- oder Drahtgewebe als jeweilige Stützgewebe bestehen, die dergestalt auch ein Auswaschen von Fasermaterial im Betrieb des Filterelementes verhindern.

Nachteilig bei dahingehenden Filterelementen, die in vielfacher Form und Ausgestaltung im Handel sind und beispielsweise bei Hydraulikanlagen, in Form von Hydrauliköl durchströmten Systemzweigen verbreitete Anwendung finden, ist, dass sie oft als Nachahmungsprodukte ohne gesicherte Eigenschaften und Kennzeichnung auf dem Markt sind. Auch kommen Plagiate, häufig mit minderer Qualität, auf den Markt, die unmittelbar die originären Marken- und Herstellerangaben tragen und insoweit die beteiligten Verkehrskreise über die tatsächliche Herkunft des Filterelementproduktes im Unklaren lassen, respektive diese täuschen.

Mit vorgebbaren Filtereigenschaften, wie Differenzdruck-Stabilität, Beta-Stabilität, Filterfeinheit in Verbindung mit der Reinheitsklasse, Schmutzaufnahmekapazität, Langstandzeitverhalten und dergleichen mehr lassen sich eine Vielzahl von Filtrationsaufgaben der Hydraulik sicher lösen, falls und soweit Originalfilter von namhaften Herstellern zum Einsatz kommen und keine minderwertigen Plagiate, die regelmäßig aus Billiglohnländern stammend auf den weltweiten Abnahmemarkt in illegaler Weise gelangen.

Aufgrund gestiegener Qualitätsanforderungen, die sich auch aus der Komplexität moderner Maschinen und Anlagen mit hydraulisch arbeitenden Komponenten ergeben, ist es jedoch unabdingbar, dass für die vorgegebene Filtrationsaufgabe durch entsprechende Auslegung des jeweiligen zum Einsatz kommenden Filterelementes dieses vorzugsweise genau auf die geforderte Filtereigenschaft individuell ausgelegt ist, insbesondere für den Fall, dass die Filterelement-Fluidfiltration eine sicherheitsrelevante Technik im jeweiligen Anwendungsfall darstellt, deren Ausfall oder Fehleinsatz zu schwerwiegenden Schäden bei Maschinen und/oder Personen führen kann.

Eine derartige Gefahr ist immer dann gegeben, wenn Nachahmungsprodukte oder technisch minderwertige Plagiate zum Einsatz kommen, bei denen verlässliche Produktinformationen fehlen und die im Fall der rechtlich unzulässigen Übernahme von Herstellerangaben, wie Marken- und Firmenbezeichnungen, fälschlich dem Original-Hersteller zugeschrieben werden, der dann für den gegebenenfalls durch das minderwertige Plagiatprodukt hervorgerufenen Maschinen- und Anlageschaden haftungstechnisch vollumfänglich von dem Betreiber auch noch in Anspruch genommen werden kann.

Aus der DE 20 2010 001 721 U1 geht ein mit einem Hologramm versehenes Filtermedium hervor. Weitere Filterelemente werden in der EP 2 050 489 A1 und der DE 10 2006 028 161 A1 beschrieben. Die WO 2006/ 005498 A1 und die WO 2012/172018 A1 lehren jeweils, ein Wertdokument mit einem fluoreszierenden Leuchtstoff zu versehen.

Ausgehend von dieser Problemstellung liegt der Erfindung die Aufgabe zugrunde, dem Filterelement-Hersteller ein Werkzeug an die Hand zu geben, mit dem es ihm ermöglicht ist, auch im Falle der Plagiaterstellung durch Dritte seine bereits ausgelieferten und in Betrieb genommenen Elemente sicher als die eigenen identifizieren zu können. Ferner soll es ihm im Bedarfsfall ermöglicht werden, Informationen zu dem ausgelieferten Filterelementprodukt vor Ort zu erhalten.

Eine dahingehende Aufgabe löst ein Filterelement mit den Merkmalen des Patentanspruches 1 in seiner Gesamtheit.

Dadurch dass gemäß dem kennzeichnenden Teil des Patentanspruches 1 mindestens eine Elementkomponente des Filterelementes zumindest teilweise mit mindestens einem Leuchtstoff oder einem sonstigen Marker derart versehen ist, dass dieser bei Auftreffen einer bestimmten Erregerwelle oder eines Wellenspektrums zu einer charakteristischen, detektierbaren Wellenemission angeregt ist; dass der Leuchtstoff oder der sonstige Marker organischer Natur und in der Art eines fluoreszierenden Stoffes ausgebildet ist, zumindest bestehend aus einem Wirtsgitter und einem Aktivator, der für das emittierende Wellenbild verantwortlich ist; dass der jeweils eingesetzte fluoreszierende Stoff in einem Klebstoff zur Verfügung steht, mit dem zumindest teilweise die einzelnen Elementkomponenten unter Bildung des Filterelementes miteinander verbindbar sind; dass der den fluoreszierenden Stoff aufweisende Klebstoff zur Verbindung der Filtermattenenden des Filtermaterials miteinander oder zur endseitigen Verbindung des Filtermaterials mit mindestens einer der Endkappen dient; und dass die einzelnen Filterfalten des plissierten Filtermaterials derart auf Abstand im Klebstoffbett der jeweiligen Endkappe fixiert sind, dass zumindest teilweise zwischen benachbarten Filterfalten eine optische Wahrnehmung auf Teile des dahingehenden Klebstoffbettes ermöglicht ist, kann ein Montage- oder Wartungspersonal vom Original-Hersteller beauftragt vor Ort, also an der Stelle des Einsatzes des jeweiligen Filterelementes sicher feststellen, ob dieses Filterelementprodukt originär aus dem Hause des Herstellers stammt oder eben nicht. Die dahingehende Feststellung vor Ort kann mit bloßem Auge geschehen; bevorzugt ist jedoch eine speziell adaptierte Erfassungs- und Auswerteeinheit vorgesehen, die den auf dem Filterelement angebrachten Leuchtstoff oder Marker für einen Betrachter erst erkennbar macht.

Sollten in dem Leuchtstoff oder dem sonstigen Marker auslesbare Informationsgehalte herstellerseitig mitgegeben worden sein, kann dann die derart vor Ort ausgelesene Information auch dem erneuten Erhalt dieser technischen Informationen dienen, beispielsweise aus welcher herstellerseitigen Baureihe das Element entstammt, wann und in welchem Werk dieses erstellt worden ist, welche Filtrationseigenschaften dem Elementmaterial inhärent sind, etc. Aufgrund der dahingehenden technischen Informationen könnte im Versagensfall und unterstellt, es handelt sich tatsächlich um ein Originalelement des Herstellers, die Produktion für solche Elemente dann auch derart geändert werden, dass etwaige Versagensfälle in Zukunft vermeidbar sind. Da es sich hier um ein völlig neues Verfahren zur Elementidentifikation und -beurteilung handelt, sind aus heutiger Sicht alle möglichen Anwendungen und Einsatzzwecke der Erfindung noch gar nicht absehbar. Die dahingehende erfindungsgemäße Lösung hat jedenfalls keine Entsprechung im Stand der Technik.

Der vorzugsweise in Ionenform vorliegende Aktivator ist für das emittierende Wellenbild, insbesondere in Form von Licht verantwortlich. Aufgrund des Einsatzes eines fluoreszierenden Stoffes ist eine besonders gute Erkennbarkeit der auszulesenden Elementinformation gewährleistet, so dass auch im Rahmen von schwer zugänglichen Maschinen- und Anlagenteilen auch bei dunkler Umgebung eine sichere Erkennbarkeit erreicht ist.

Vorzugsweise ist dabei des Weiteren vorgesehen, dass als Wirtsgitter oxidische Materialien, vorzugsweise Y₂O₃ oder Lu₃Al₅O₁₂ dienen, und dass als Aktivator vorzugsweise seltene Erden und/oder Übergangsmetalle, wie Mangan, Chrom oder Eisen, eingesetzt sind. Insbesondere bei der Verwendung von seltenen Erden, die auf dem Markt relativ teuer angeboten werden, ist es vorteilhaft, diese in Ionenform im Wirtsgitter einzubringen, da sich dergestalt aufgrund der geringen Eintragsmenge an seltenen Erden die Kosten in Grenzen halten lassen. Da die Filterelemente als Ersatzteile anwenderseitig nur im sehr kostengünstigen Rahmen nachgefragt werden, kann für das erfindungsgemäße Identifizierungssystem nicht allzu großer Aufwand betrieben werden, um die Gesamtkosten für den Abnehmer nicht in unattraktiver Weise zu erhöhen.

Sofern als Wirtsgitter oxidische Materialien zur Anwendung kommen, lässt sich das Wirtsgitter für den eigentlichen, die Fluoreszenz bewirkenden Aktivator sehr stabil und abriebfest gestalten, so dass auch im rauen Alltagsbetrieb für das Filterelement es nicht ungewollt zu einer Beeinträchtigung der Kennzeicheneigenschaft des Aktivators kommt.

Bei einer weiteren bevorzugten Ausführungsform des erfindungsgemäßen Filterelementes ist vorgesehen, dass für eine starke Reflexion an der Oberfläche der jeweiligen Elementkomponente kurzwelliges, insbesondere UItraviolettes (UV)-Licht und für tiefere, unterhalb der Oberfläche liegende Materialschichten langwelliges Licht, insbesondere Infrarot (IR)-Licht eingesetzt ist. Für die Analyse der dahingehend wirkenden Leuchtstoffe eignet sich dann insbesondere die Lichtspektroskopie, da alle Bereiche des Lichtspektrums, wie UV/VIS/IR-Spektren sicher detektorisch abgedeckt werden können.

Eingesetztes, sehr kurzwelliges Identifikationslicht, das für das menschliche Auge unsichtbar ist, wird durch den jeweils eingesetzten Leuchtstoff oder Marker teilweise absorbiert und reemittiert. Hieraus resultierend wird langwelliges Licht zurückgeworfen und kann vom menschlichen Auge dann direkt erfasst werden. Alternativ besteht auch die Möglichkeit, dass kurzwelliges Licht zurückgeworfen wird, welches nicht mit dem menschlichen Auge erkennbar ist, sondern mittels eines Spektroskopie-Verfahrens speziell nachgewiesen wird.

Die Partikelgröße der eingesetzten Leuchtstoffpigmente ist bevorzugt kleiner als 1 *µ*m, so dass sich die dahingehenden Pigmente leicht in Klebstoffe oder Tinten einmischen lassen, so dass auch bei einer bereits geringen Eintragsmenge an Pigmenten eine sichere spätere Identifizierung des Filterelementes möglich ist. Zumindest rein rechnerisch können 300 Milliarden Kombinationen an unverwechselbaren "Fingerabdrücken" derart erzeugt werden, die sich von ihrem Spektralverhalten her dennoch deutlich unterscheiden, so dass in nahezu fälschungssicherer Weise es dem Plagiatersteller unmöglich ist, den speziellen Fingerabdruck, aufgebracht durch den Originalhersteller des Filterelementes nachzuahmen, so dass auf jeden Fall ein sicheres Auseinanderhalten von Original- und Plagiatprodukt vor Ort, also auch durch den Anwender des Filterelementes möglich ist.

Der Klebstoff kann ein Ein- oder Mehr-Komponenten-Klebstoff sein.

Eine weitere Möglichkeit der Kennzeichnung von Komponenten der bei der Herstellung von Filterelementen zum Einsatz kommenden Bauteile, z.B. der Kunststoff (PET)-Hülse als äußere Stützrohrhülle, der Endkappen, der O-Ringe als Dichtmittel, des Bypass-Ventiles oder dem Filtermaterial selbst kann in der Weise erfolgen, dass eine spezielle Tinktur, die aus einer Tinte, in der Leuchtstoffe suspergiert oder dispergiert sind, als Fluoreszenzmarker aufgetragen wird. Der Auftrag kann im Druckverfahren z.B. mittels Tampondruck, erfolgen, so dass auch unebene Flächen bedruckt werden können. Auch besteht die Möglichkeit, das Leuchtstoff- oder Markermaterial unmittelbar in die Kunststoff- oder Elastomermasse der damit hergestellten Komponenten einzumischen.

Neben der Tinte als Träger für Leuchtstoffe eignen sich auch ein- oder zweikomponentige Epoxydharze und Polyurethane. In gleicher Weise können weitere chemisch härtende Klebstoffe, die nach dem Prinzip der Polyaddition, der Polykondensation oder Polymerisation zu einem Duromer, Thermoplast oder Elastomer aushärten, verwendet werden. Alle Klebstoffe können als 2K- oder 1K-Varianten verarbeitet und mit fluoreszierenden Markern versetzt werden. Der Fluoreszenzmarker als Leuchtstoff ist in dem Klebstoff dispergiert oder suspergiert und wird durch die Vernetzung und Aushärtung des Klebstoffes fest in das Klebegefüge eingebettet, so dass auch bei lang anhaltenden Einlagerungs- und Betriebsdauern eine funktionssichere Kennzeichnung erhalten bleibt.

Daneben ist auch eine Umsetzung der Erfindung mit physikalisch abbindendem Klebstoff möglich.

Weitere Einzelheiten der Erfindung werden anhand eines Ausführungsbeispiels in Verbindung mit den zugehörigen Zeichnungen näher beschrieben. Von den Zeichnungen zeigen in prinzipieller und nicht maßstäblicher Darstellung:
- Fig. 1: teilweise im Schnitt, teilweise in Ansicht ein Ende eines Filterelementes;
- Fig. 2: einen Querschnitt durch das in Fig. 1 gezeigte Filterelement;
- Fig. 3: das Emissionsspektrum eines nach Anregung durch UV-Licht emittierten individuellen Lichtspektrums eines Markers;
- Fig. 4: die Anordnung von Fluoreszenz-Markern in einem 2K-Epoxydharz;
- Fig. 5: die Anordnung von Fluoreszenz-Markern in einem 1K-Epoxydharz; und
- Fig. 6: die Anordnung von Fluoreszenz-Markern in einem 2K-Polyurethanmaterial; alle vorstehend genannten Fluoreszenzmarker symbolisch in Kreis- oder Punktform dargestellt, wobei jeder Kreis oder Punkt einem Wirtsgitter mit eingelagerten Aktivatorionen entspricht.

Einzelheiten der Erfindung werden nachstehend anhand von Ausführungsbeispielen in Verbindung mit den vorgenannten Zeichnungen beschrieben.

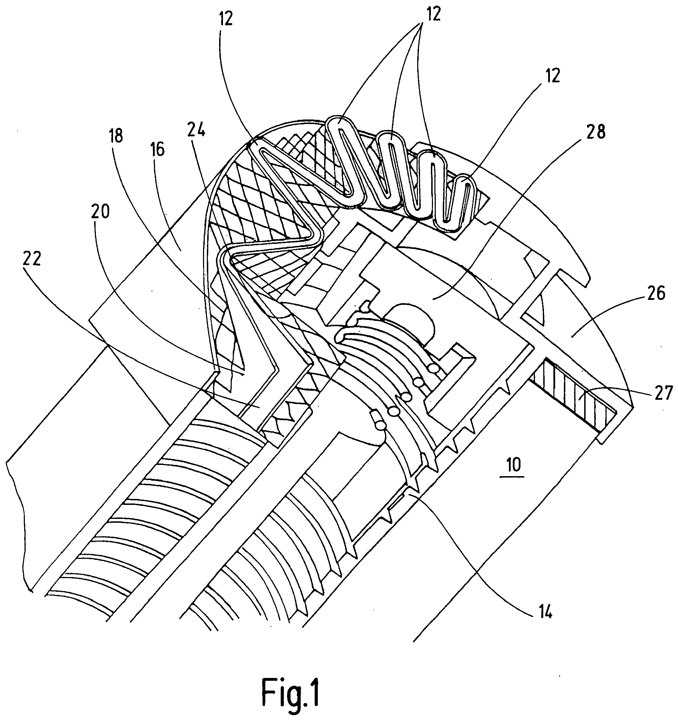

Das in der Fig. 1 teilweise mit seiner oberen Hälfte dargestellte Filterelement, wie es zum Stand der Technik (DE 10 2004 061 078 A1) zählt, weist als Filterbauteil eine Filtermatte 10 mit einer vorgebbaren Flächenausdehnung und vorgebbaren Filtereigenschaften auf. Die dahingehende Filtermatte kann zylindrisch ausgebildet sein (nicht dargestellt) oder, wie in der Fig. 1 wiedergegeben, gefaltet oder plissiert sein mit einzelnen Filterfalten 12, die in dichter Packungsfolge sich zwischen einem inneren fluiddurchlässigen Stützrohr 14 erstrecken sowie zwischen einem äußeren zylindrischen Gehäusemantel, respektive Stützrohrhülle 16, die gleichfalls fluiddurchlässig ist. Der besseren Darstellung wegen sind die einzelnen Filterfalten 12 teilweise auseinandergezogen dargestellt und der Einzellagenaufbau der plissierten Filtermatte 10 ergibt sich aus der dem Betrachter zugewandten Teildarstellung.

Bei dahingehend aufgebauten Filterelementen besteht die Filtermatte 10 üblicherweise aus einer ersten Lage als Stützgewebe 18, einer zweiten Lage 20 als Schutzvlies, einer dritten Lage 22 als Hauptvlies; gegebenenfalls einer weiteren, nicht näher dargestellten Lage eines sich anschließenden Schutzvlieses und jedenfalls einer vierten Lage 24 eines erneuten innenumfangsseitig verlaufenden Stützgewebes 24. Die genannten Stützgewebe 18, 24 können aus einem Drahtgewebe, einem Kunststoffgitter oder einem Kunststoffgewebe bestehen. Die Schutzvlieslagen 20 bestehen regelmäßig aus einem Kunststoffvlies und die Hauptvlieslage 22 besteht aus Materialien wie Glasfaserpapier, synthetischem Filtermaterial (Melt-blown-Fasern) sowie Zellulosepapier. Die genannten Lagen können auch aus sogenannten Komposit-Materialien gleicher oder verschiedener Art aufgebaut sein. Der dahingehende Aufbau ist bei hydraulischen Filterelementen üblich, so dass an dieser Stelle hierauf nicht mehr näher eingegangen wird.

Die Filtermatte 10 als Filterbauteil weist in Abhängigkeit ihres Lagenaufbaus und der jeweils eingesetzten Filtermaterialien vorgebbare Filtereigenschaften auf, die sich an der Filtrationsaufgabe orientieren, wobei grundsätzlich eine hohe Differenzdruckstabilität gewünscht ist ebenso wie eine hohe Beta-Stabilität über einen weiten Differenzdruckbereich, vorgebbare Filterfeinheiten für alle Reinheitsklassen, große Schmutzaufnahmekapazitäten sowie lange Standzeiten bei gegebenenfalls kleiner Baugröße.

In Blickrichtung auf die Fig. 1 gesehen, wird bei der bekannten Lösung die Filtermatte 10 von außen nach innen durchströmt und stützt sich dergestalt innenumfangsseitig mit ihren dahingehenden Faltenumlenkungen am Außenumfang des Kunststoff-Stützrohres 14 mit seinen ringförmigen Fluid-Durchlässen ab. Die Filtermattenenden sind jeweils in einer Endkappe aufgenommen, wobei in der Fig. 1 nur die obere Endkappe 26 dargestellt ist, wobei das dahingehende Filtermattenende über ein Klebstoffbett 27 fest in der Endkappe 26 aufgenommen und mit dieser insoweit fest verklebt ist. Ferner umfasst die dahingehende obere Endkappe 26 ein federbelastetes Bypassventil 28, das aus Sicherheitsgründen einen Fluiddurchlass ermöglicht, auch wenn die Filtermatte 10 von Verschmutzung zugesetzt, respektive verblockt ist.

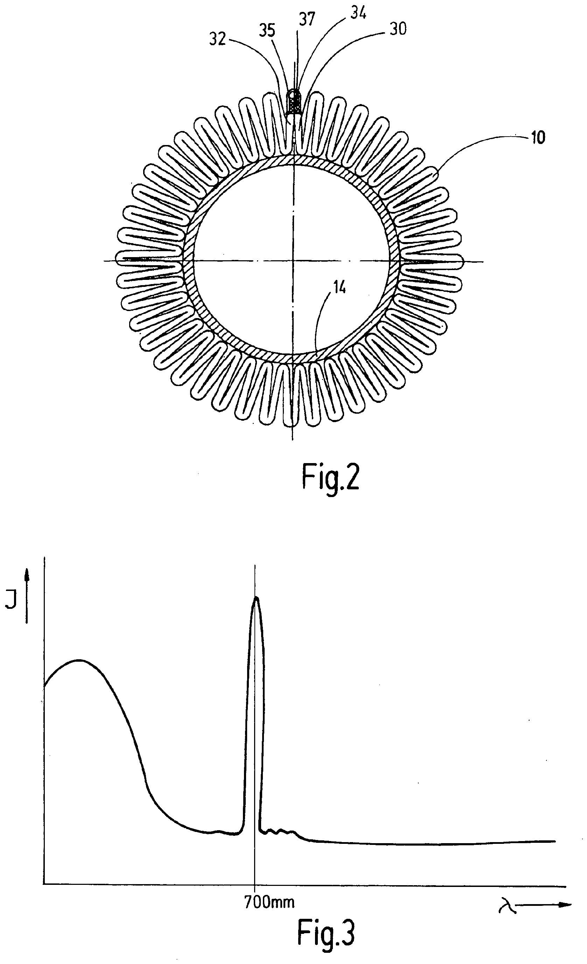

Wie sich aus der Querschnittsdarstellung des Filterelementes nach der Fig. 2 ergibt, werden in Umfangsrichtung der plissierten Filtermatte 10 gesehen, deren beiden freien Längsränder 30, 32 endseitig zusammengefasst in einem bügelförmigen Längsnahtclip 34 aufgenommen und der Aneinanderhalt von Längsnahtclip 34 mit den beiden Längsrändern 30, 32 wiederum über ein Klebstoffbett 35 sichergestellt. Der dahingehende Aufbau ist üblich und beispielsweise hinreichend im Stand der Technik in Form der EP 1 409 106 B1 beschrieben. Die jeweilige Verklebung der Klebstoffbetten 27 und 35 erfolgt mittels eines Klebstoffes, in dem fluoreszierende Partikel enthalten sind, wobei das jeweilige Klebstoffbett 27, 35 in der Art einer Vergussmasse ausgebildet die Verbindung der Filtermatte 10 mit der jeweiligen Endkappe 26 erlaubt sowie die Verbindung der freien Längsränder 30, 32 miteinander mittels des Längsnahtclips 34. Ferner sind Filterelementlösungen möglich, bei denen die Klebung der Längsränder 30, 32 auch ohne Längsnahtclip 34 (nicht dargestellt) erfolgen kann. Als Klebstoffe können grundsätzlich sowohl ein- als auch zweikomponentige Kleber zum Einsatz kommen; ebenso ist eine Umsetzung mit physikalisch abbindenden Klebstoffen möglich.

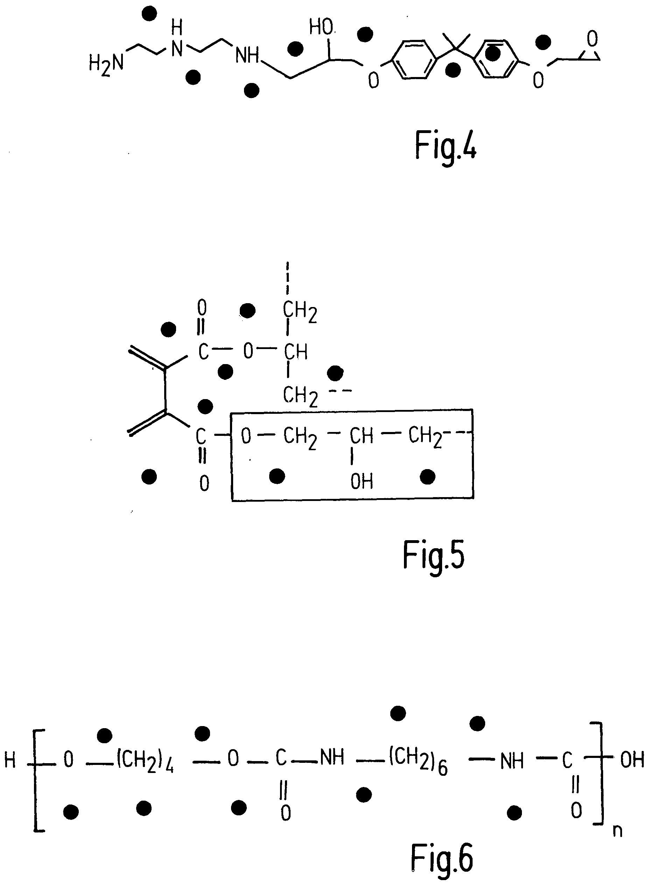

Aus der Fig. 4 geht ein Beispiel für ein Zweikomponenten-Epoxidharz (2K-System) hervor, wobei das Harz Di- oder Polyepoxyde auf Basis von BisphenolA, Novolaken® beinhaltet und als Härter kommen Polyamine, Thiole sowie Anhydride zum Einsatz. Die Aushärtung des Klebstoffes erfolgt durch Polyaddition, wobei dergestalt nach Aushärtung ein Duromer erhalten ist. In diese Zweikomponenten-Expoxidharz-Grundstruktur sind dann die Fluoreszenzmarker in Punkt-, respektive in Kreisform, symbolisch dargestellt in dem Epoxidharz integriert.

Fig. 5 zeigt das Beispiel eines Einkomponenten-Epoxidharzes (1K-System) als geeigneten Klebstoff zur Einbindung der Fluoreszenzmarker, wobei das dahingehende Harz aus einem Karbonsäureanhydrid und einer Epoxidharzkette mit Hydroxygruppen von der Basis her aufgebaut ist. Fig. 6 hingegen zeigt als Beispiel ein Zweikomponenten-Polyurethansystem (2K-System) auf der Basis von Hexamethylendiisocyanat mit 1,4-Butylenglykol. Auch in den Figuren 5 und 6 sind die jeweils in das Klebstoff-Grundsystem eingebundene Fluoreszenzmarker als Punkte bzw. Kreise in prinzipieller Weise dargestellt.

Zum Aufbau des jeweiligen Fluoreszenzmarkers werden fluoreszierende Stoffe verwendet, die vornehmlich aus Elementen der "seltenen Erden" gebildet sind. In genormten Periodensystemen sind diese unter den Nummern 21, 39 sowie 57 bis 71 geführt. Die dahingehenden Stoffe haben durch Anregung mit einem bestimmten Lichtwellenspektrum, beispielsweise in Form von UV-Licht eine fluoreszierende Wirkung. Der organische Leuchtstoff als Ganzes, der als Fluoreszenzmarker Verwendung findet, besteht aus einem Wirtsgitter sowie Aktivatorionen, die für das emittierende Licht verantwortlich sind. Als Wirtsgitter eignen sich wegen ihrer hohen Stabilität in erster Linie oxidische Materialien, wie z.B. Y₂O₃ oder Lu₃Al₅O₁₂. Die verwendeten gängigen Aktivatoren sind die bereits genannten seltenen Erden sowie Übergangsmetalle, wie Mangan, Chrom oder Eisen. Der dahingehend jeweils speziell ausbildbare Fluoreszenzmarker ist in den Figuren 4 bis 6 symbolisch in Punkt- oder Kreisdarstellung wiedergegeben.

Werden nun die vorstehend bezeichneten fluoreszierenden Stoffe, die man auch als Leuchtstoffpigmente bezeichnen kann, durch kurzwelliges, für menschliche Augen unsichtbares Licht bestrahlt, wird dieses teilweise adsorbiert und reemittiert. Dabei kann die Fluoreszenzmarkeranordnung derart gewählt sein, dass das kurzwellige Licht als langwelliges Licht vom Träger des Fluoreszenzmarkers zurückgeworfen wird und dergestalt vom menschlichen Auge unmittelbar erfasst werden kann. Alternativ besteht die Möglichkeit, dass das eingestrahlte kurzwellige Licht auch als kurzwelliges Licht wieder zurückgeworfen wird, das dann mit dem menschlichen Auge nicht erkennbar ist, aber sehr wohl mittels Analyse- und Auswertegeräten auf der Basis der Spektroskopie.

Aus der Fig. 3 geht beispielhaft ein dahingehendes Emissionsspektrum eines speziell entwickelten fluoreszierenden Stoffes (Fluoreszenzmarker) hervor, der in einem Klebstoff eingebunden ist, gemäß einem der vorstehend beschriebenen Systeme. Fig. 3 gibt die Intensität I des vom Fluoreszenzmarker zurückgeworfenen Lichtes über der Wellenlänge λ wieder. Wie sich aus der Peak-Darstellung nach der Fig. 3 ergibt, ist eine signifikante Reflexionsmarkierung bei beispielsweise 700 nm gesetzt, so dass anhand des vorliegenden gemessenen Emissionsspektrums das derart mit dem Fluoreszenzmarker versehene Filterelementprodukt als Originalprodukt ohne Weiteres identifizierbar ist, ebenso ist ein Produkt als Plagiat detektierbar, das ein dahingehendes Emissionsspektrum gar nicht aufweist oder mit einer anders verlaufenden Peak-Darstellung.

Grundsätzlich gilt, dass jeder fluoreszierende Stoff ein individuelles Lichtspektrum nach Anregung durch eine Lichtquelle, beispielsweise UV-Licht, aussendet. Das in Fig. 3 aufgezeigte Emissionsspektrum lässt sich, soweit nicht mit dem menschlichen Auge detektierbar, mit Hilfe stationärer Spektroskopie-Geräte sowohl in einem Labor, aber auch vor Ort mittels Handmessgeräten nachweisen. Erhaltene Spektren im ultravioletten Bereich, im Infrarotbereich sowie im visuellen Bereich sind darüber hinaus digitalisierbar und können mittels geeigneter Kommunikationseinrichtungen mit Herstelldaten der sich verantwortlich zeichnenden Herstellfirma abgeglichen werden.

Mit den spektroskopischen Verfahren ist es möglich, das charakteristische Spektrum zu analysieren und eine eindeutige Identifizierung zu erhalten, vergleichbar einem genetischen Fingerabdruck. Da die Möglichkeit besteht, verschiedene fluoreszierende Stoffe zu mischen und somit durch eine Überlagerung der zurückgeworfenen Wellenemissionen eigene neue Fingerabdrücke zu generieren, ist das Nachempfinden des sich hieraus ergebenden individuellen Emissionsspektrums durch einen Plagiathersteller kaum möglich, so dass das das beschriebene Identifikationssystem als fälschungssicher anzusehen ist. Darüber hinaus lassen sich dergestalt auch technische Informationen über den Fluoreszenzmarker generieren, die dann ausgelesen werden können, um Zusatzinformationen zu erhalten, beispielsweise über den Ort und die Art der Herstellung des jeweils derart gekennzeichneten Filterelementes.

Der jeweils eingesetzte Fluoreszenzmarker ist auch deshalb fälschungssicher, da beispielsweise die Art, die Herkunft, die Reinheit, aber auch die Partikelgröße der eingesetzten Rohstoffe eine große Rolle bei dem erzeugten unverwechselbaren Emissionsspektrum spielen. Auch die Art der Herstellung der Leuchtstoffpigmente, beispielsweise auf Basis von Sol-Gel-Verfahren oder in der Art einer Festkörperreaktion hat Auswirkung auf das entstehende charakteristische Emissionsspektrum, ebenso wie beispielsweise die Herstellungstemperatur, die Heizzeit oder die Art des eingesetzten Schmelztiegels, was die Sicherheit vor ungewollten Nachahmungen durch Plagiathersteller erhöht. Da die einzelnen Filterfalten 12 der Filtermatte 10 aufspreizend in der jeweiligen Endkappe 26 durch das Klebstoffbett 27 gehalten sind, besteht von außen her auf optisch direktem Weg Zugang zur Beobachtung der jeweils eingesetzten Fluoreszenzmarker. Dies gilt auch für den Fall, dass die Filterlängsränder 30, 32 mit dem Klebstoffbett 35 mit geeigneten Fluoreszenzmarkern miteinander verbunden und versiegelt sind. Die Markierung kann am Filterelement an diskreten, ausgewählten Orten vorgesehen sein, was das Auffinden durch einen potentiellen Plagiateur erschwert, so dass auch insoweit die Sicherheit erhöht ist.

Weitere Anbringungsmöglichkeiten bestehen darin, den jeweiligen Fluoreszenzmarker in die Kunststoffmaterialien von Endkappen 26, Längsnahtclips 34, Komponenten eines Bypass-Ventiles 28 und dergleichen mehr einzumischen. Ferner besteht die Möglichkeit, den jeweiligen Fluoreszenzmarker auch in das Elastomermaterial von Dichteinrichtungen, beispielsweise in Form von O-Dichtringen (nicht dargestellt), einzumischen. Da die Fluoreszenzmarker nicht nur in einem Klebstoffbett und/oder in Kunststoffmaterialien eingemischt werden müssen, sondern auch beispielsweise im Rahmen einer fluoreszierenden Tinte verarbeitet auf das Element aufbringbar sind, beispielsweise in Form eines Tampondruckes oder im Rahmen eines Farb-Aufwalzverfahrens, kann beispielsweise im Rahmen einer Beschriftung für den äußeren Gehäusemantel 16 der jeweilige Marker auf diese Filterelementkomponenten dergestalt aufgebracht werden. Ferner ist ein Einbringen des Fluoreszenzmarkers grundsätzlich auch in die Lagen der Filtermatte 10 möglich.

Wie bereits dargelegt, kann je nach eingesetztem Pigment, das beispielsweise mit dem Auge nicht zu sehen ist, bei etwaigen Fälschern auch nicht unmittelbar das Wissen entstehen, dass das Filterelement überhaupt mit einem Kopierschutz versehen ist. Im Hinblick auf die Vielzahl von möglichen Anbringungsstellen am Filterelement wie vorstehend beschrieben ist es darüber hinaus schwer für den Fälscher, überhaupt an der geeigneten Stelle nach dem Kopierschutz zu suchen, und selbst wenn er diesen findet, kann er aufgrund der Komplexität der auszuwählenden und aufzubauenden Emissionsspektren den Kopierschutz nicht unmittelbar übernehmen.

Zusammenfassend bleibt daher festzuhalten, dass mit der vorstehenden genannten Filterelementlösung ein wirksamer Kopierschutz erreicht wird, der sich kostengünstig verwirklichen lässt. Dies hat so keine Entsprechung im Stand der Technik.

## Patentansprüche

1. Filterelement für die Fluidfiltration, insbesondere für Hydraulikfluid, bestehend aus Elementkomponenten, sowie einem zwischen zwei Endkappen (26) sich erstreckenden, plissierten und mehrlagigen, Filtermaterial (10), das unter Bildung eines Hohlzylinders zumindest teilweise ein fluiddurchlässiges Stützrohr (14) aufweist, wobei mindestens eine Elementkomponente des Filterelementes zumindest teilweise mit mindestens einem Leuchtstoff oder einem sonstigen Marker derart versehen ist, dass dieser bei Auftreffen einer bestimmten Erregerwelle oder eines Wellenspektrums zu einer charakteristischen, detektierbaren Wellenemission angeregt ist;
**dadurch gekennzeichnet,**
**dass** der Leuchtstoff oder der sonstige Marker organischer Natur und in der Art eines fluoreszierenden Stoffes ausgebildet ist, zumindest bestehend aus einem Wirtsgitter und einem Aktivator, der für das emittierende Wellenbild verantwortlich ist;
**dass** der jeweils eingesetzte fluoreszierende Stoff in einem Klebstoff (27, 35) zur Verfügung steht, mit dem zumindest teilweise die einzelnen Elementkomponenten unter Bildung des Filterelementes miteinander verbindbar sind;
**dass** der den fluoreszierenden Stoff aufweisende Klebstoff (27, 35) zur Verbindung der Filtermattenenden (30, 32) des Filtermaterials (10) miteinander oder zur endseitigen Verbindung des Filtermaterials mit mindestens einer der Endkappen (26) dient; und
**dass** die einzelnen Filterfalten (12) des plissierten Filtermaterials (10) derart auf Abstand im Klebstoffbett (27) der jeweiligen Endkappe (26) fixiert sind, dass zumindest teilweise zwischen benachbarten Filterfalten (12) eine optische Wahrnehmung auf Teile des dahingehenden Klebstoffbettes (27) ermöglicht ist.

2. Filterelement nach Anspruch 1, **dadurch gekennzeichnet, dass** der vorzugsweise in Ionenform vorliegende Aktivator für das emittierende Wellenbild, insbesondere in Form von Licht, verantwortlich ist.

3. Filterelement nach Anspruch 1 oder 2, **dadurch gekennzeichnet, dass** als Wirtsgitter oxidische Materialien, vorzugsweise Y₂O₃ oder Lu₃Al₅O₁₂, und dass als Aktivator, vorzugsweise seltene Erden und/ oder Übergangsmetalle, wie Mangan, Chrom oder Eisen, eingesetzt sind.

4. Filterelement nach einem der vorstehenden Ansprüche, **dadurch gekennzeichnet, dass** für eine starke Reflexion an der Oberfläche der jeweiligen Elementkomponente kurzwelliges Licht, insbesondere UV-Licht und für tiefere, unterhalb der Oberfläche liegende Materialschichten langwelliges Licht, insbesondere IR-Licht, eingesetzt ist.

5. Filterelement nach einem der vorstehenden Ansprüche, **dadurch gekennzeichnet, dass** das kurzwellige, insbesondere vom menschlichen Auge nicht erfassbare Licht von der jeweiligen Elementkomponente absorbiert und als langwelliges, vom menschlichen Auge erfassbares Licht reemittiert wird oder dass kurzwelliges, zurückgeworfenes Licht mittels eines Spektroskopie-Verfahrens detektierbar ist.

6. Filterelement nach einem der vorstehenden Ansprüche, **dadurch gekennzeichnet, dass** durch geeignete Wahl von verschiedenen Aktivatoren eine Art individueller Fingerabdruck zumindest für eine Gattung von Filterelementen geschaffen ist.

7. Filterelement nach einem der vorstehenden Ansprüche, **dadurch gekennzeichnet, dass** die Aktivatoren in Partikelform vorliegen mit einer Größe von < 1*µ*m.

8. Filterelement nach einem der vorstehenden Ansprüche, **dadurch gekennzeichnet, dass** der Klebstoff (27, 35) ein Ein- oder Mehr-Komponenten-Klebstoff ist.

## Claims

1. Filter element for fluid filtration, especially for hydraulic fluid, consisting of element components and a pleated, multi-layer filter material (10) extending between two end caps (26), said material at least partially comprising a fluid-permeable supporting tube (14) to form a hollow cylinder, at least one element component of the filter element being at least partially furnished with at least one luminescent material or another marker such that this is stimulated to produce a characteristic, detectable wave emission when exposed to a specific excitation wave or wave spectrum;
**characterized in that**
the luminescent material or other marker is organic in nature and designed in the form of a fluorescent material, at least consisting of a host lattice and an activator, which is responsible for the emitting wave profile;
**in that** the fluorescent material used in each case is available in an adhesive (27, 35) with which the individual element components can be at least partially joined together to form the filter element;
**in that** the adhesive (27, 35) comprising the fluorescent material is used to join together the ends (30, 32) of the filter mat of the filter material (10) or to join the end of the filter material to at least one of the end caps (26); and
**in that** the individual filter pleats (12) of the pleated filter material (10) are fixed and spaced in the adhesive bed (27) of the respective end cap (26) in such a way that it is at least partially possible to obtain a visual perception of parts of the adhesive bed (27) extending between adjacent filter pleats (12).

2. Filter element according to claim 1, **characterised in that** the activator, which is preferably present in ionic form, is responsible for the emitting wave profile, especially in the form of light.

3. Filter element according to either claim 1 or 2, **characterised in that** oxide materials, preferably Y₂O₃ or Lu₃Al₅O₁₂ are used as the host lattice, and rare earth elements and/or transition metals such as manganese, chromium or iron are preferably used as the activator.

4. Filter element according to any one of the preceding claims, **characterised in that** shortwave light, especially UV light, is used to ensure strong reflection on the surface of the respective element component, and longwave light, especially IR light, is used for deeper material layers beneath the surface.

5. Filter element according to any one of the preceding claims, **characterised in that** the shortwave light, especially light which is not visible to the human eye, is absorbed by the respective element component and re-emitted as longwave light that is visible to the human eye, or **in that** reflected shortwave light can be detected by means of a spectroscopy method.

6. Filter element according to any one of the preceding claims, **characterised in that** a kind of individual fingerprint is created, at least for a certain type of filter elements, by appropriate selection of various activators.

7. Filter element according to any one of the preceding claims, **characterised in that** the activators are available in the form of particles measuring < 1 µm.

8. Filter element according to any one of the preceding claims, **characterised in that** the adhesive (27, 35) is a single or multi-component adhesive.

## Revendications

1. Elément de filtre pour la filtration de fluide, notamment de fluide hydraulique, constitué de constituants d'élément, ainsi que d'une matière (10) filtrante, plissée et à plusieurs couches, qui s'étend entre deux coiffes (26) d'extrémité et qui a, en formant un cylindre creux, au moins en partie, un tube (14) d'appui perméable au fluide, dans lequel au moins un constituant de l'élément de filtre est pourvu, au moins en partie, d'au moins une substance luminescente et d'un autre marqueur, de manière à ce que celui-ci, lors de l'incidence d'une onde d'excitation ou d'un spectre d'onde déterminé, soit excité en une émission d'onde caractéristique, qui peut être détectée,
**caractérisé**
**en ce que** la substance luminescente ou l'autre marqueur est de nature organique et est constituée à la manière d'une substance fluorescente, constituée au moins d'un réseau hôte et d'un activateur responsable de la formation d'onde émettrice ;
**en ce que** la substance fluorescente utilisée est mise à disposition dans une colle (27, 35), par laquelle, au moins en partie, les divers constituants de l'élément peuvent être reliés les uns aux autres en formant l'élément de filtre ;
**en ce que** la colle (27, 35), ayant la substance fluorescente, sert à la liaison des extrémités (30, 32) de matte de filtre de la matière (10) filtrante ou à la liaison, du côté de l'extrémité, de la matière filtrante à au moins l'une des coiffes (26) d'extrémité ; et
**en ce que** les divers plis (12) de filtre de la matière (10) filtrante plissée sont immobilisés à distance du lit (27) de colle de la coiffe (26) d'extrémité respective, de manière à rendre possible, au moins en partie, entre des plis (12) du filtre voisins, une perception optique sur des parties du lit (27) de colle concerné.

2. Elément de filtre suivant la revendication 1, **caractérisé en ce que** l'activateur, présent de préférence sous la forme d'ions, est responsable de la formation d'onde émettrice, notamment sous forme de lumière.

3. Elément de filtre suivant la revendication 1 ou 2, **caractérisé en ce qu'**il est utilisé, comme réseau hôte, des matériaux oxydés, de préférence Y₂O₃ ou Lu₃Al₅O₁₂ et, comme activateur, de préférence des terres rares et/ou des métaux de transition, comme du manganèse, du chrome ou du fer.

4. Elément de filtre suivant l'une des revendications précédentes, **caractérisé en ce que**, pour avoir une grande réflexion à la surface du constituant de l'élément respectif, on utilise de la lumière de courte longueur d'onde, notamment de la lumière UV, et pour des couches de matière se trouvant plus profondément en dessous de la surface, de la lumière de grande longueur d'onde, notamment de la lumière IR.

5. Elément de filtre suivant l'une des revendications précédentes, **caractérisé en ce que** la lumière de courte longueur d'onde, notamment non décelable par l'œil humain, est absorbée par le constituant respectif de l'élément et est réémise sous la forme de lumière de grande longueur d'onde décelable par l'œil humain ou **en ce que** de la lumière rejetée de courte longueur d'onde peut être détectée au moyen d'un procédé de spectroscopie.

6. Elément de filtre suivant l'une des revendications précédentes, **caractérisé en ce qu'**en choisissant de manière appropriée des activateurs différents, on ménage une sorte d'empreinte digitale individuelle au moins pour un type d'élément du filtre.

7. Elément de filtre suivant l'une des revendications précédents, **caractérisé en ce que** les activateurs sont sous forme de particule d'une dimension inférieure à 1 µm.

8. Elément de filtre suivant l'une des revendications précédentes, **caractérisé en ce que** la colle (27, 35) est une colle à un composant ou à plusieurs composants.
